# EUROPEAN PATENT APPLICATION

(11) **EP 4 671 573 A1**
(43) Date of publication of application: **31.12.2025**
(21) Application number: 25185280.2
(22) Date of filing: 25.06.2025
(51) Int. Cl.: F16H 61/662, F16H 61/12

(54) **STRADDLED VEHICLE**

(30) Priority: 28.06.2024 JP 2024104827
(71) Applicant: Yamaha Hatsudoki Kabushiki Kaisha, Iwata-shi, Shizuoka 438-8501 (JP)
(72) Inventor: EGUCHI, Kazuya, Iwata-shi, 2500 (JP)
(74) Representative: Studio Torta S.p.A.

(57) **Abstract**

There is discloseda straddled vehicle (1) including an engine (11), a continuously variable transmission (21), an electric motor (31), and a controller (40). The engine (11) generates power; the continuously variable transmission (21) transmitting power of the engine (11) to a rear wheel (5); the electric motor (31) changing a shift position of the continuously variable transmission (21); the controller (40) controlling the electric motor (31); when the controller (40) changes from a non-power-supply state to a power-supply state, the controller (40) controls the electric motor (31) to make a shift speed of the shift position equal to or less than a first speed (V1); the first speed (V1) being smaller than a maximum value (M) of the shift speed.

## Description

The present invention relates to a straddled vehicle.

### Prior art

Japanese Unexamined Patent Publication No. 2009-220687A discloses a straddled vehicle. The straddled vehicle includes a transmission. The speed change ratio of the transmission is electronically controlled.

The transmission includes a transmission mechanism. The transmission mechanism includes an input shaft, a primary sheave, a secondary sheave, and a V-belt. The primary sheave is connected to the input shaft. The primary sheave includes a primary fixed sheave and a primary movable sheave. The primary fixed sheave is fixed to one end of the input shaft. The primary movable sheave is located to face the primary fixed sheave. The primary movable sheave is movable in an axial direction of the input shaft. The secondary sheave is located behind the primary sheave. The secondary sheave includes a secondary fixed sheave and a secondary movable sheave. The secondary movable sheave faces the secondary fixed sheave. The V-belt is wound around the primary sheave and the secondary sheave.

The speed change ratio of the transmission depends on a shift position of the transmission. The shift position of the transmission is, for example, a position of the primary movable sheave in the axial direction of the input shaft.

The transmission includes a controller and a motor. The controller drives the motor. The primary movable sheave moves in the axial direction of the input shaft by driving of the motor.

The above-described transmission is classified as a continuously variable transmission.

The controller controls the shift position of the continuously variable transmission. For example, the controller changes the shift position according to a state of the straddled vehicle.

Further, the controller controls the shift speed of the shift position. The shift speed is a speed at which the shift position changes. The shift speed is a shift amount of the shift position per unit time. For example, the controller changes the shift speed according to the state of the straddled vehicle.

A state of the controller to which power is supplied is referred to as a "power-supply state". When the controller is in the power-supply state, the controller controls the shift position. When the controller is in the power-supply state, the controller controls the shift speed.

A state of the controller to which power is not supplied is referred to as a "non-power-supply state". When the controller is in the non-power-supply state, the controller does not control the shift position. When the controller is in the non-power-supply state, the controller does not control the shift speed. When the controller is in the non-power-supply state, the shift position is fixed. When the controller is in the non-power-supply state, the shift speed is zero (0).

When the power supply of the controller is cut off, the controller changes from the power-supply state to the non-power-supply state. Therefore, when the power supply of the controller is cut off, the control of the shift position is stopped. When the power supply of the controller is cut off, the control of the shift speed is stopped.

When the power supply of the controller is restored, the controller changes from the non-power-supply state to the power-supply state. Therefore, when the power supply of the controller is restored, the control of the shift position is resumed. When the power supply of the controller is restored, the control of the shift speed is resumed.

When the power supply of the controller is momentarily interrupted, the power supply of the controller is temporarily or momentarily interrupted, and then the power supply of the controller is restored. When the power supply of the controller is momentarily interrupted, the power supply of the controller changes from the power-supply state to the non-power-supply state, and then changes from the non-power-supply state to the power-supply state. Therefore, when the power supply of the controller is momentarily interrupted, the control of the shift position is stopped, and then the control of the shift position is resumed. When the power supply of the controller is momentarily interrupted, the control of the shift speed is stopped, and then the control of the shift speed is resumed.

Due to an electrical connection failure between the controller and the battery, the power supply of the controller may be cut off, or the power supply of the controller may be restored. Due to an electrical connection failure between the controller and the battery, the power supply of the controller may be momentarily interrupted.

Even when the straddled vehicle is stopped or when the straddled vehicle is traveling, an electrical connection failure between the controller and the battery may occur. Therefore, even when the straddled vehicle is stopped or when the straddled vehicle is traveling, the power supply of the controller may be restored.

Therefore, when the power supply of the controller is restored, the straddled vehicle may be stopped, and the speed may be zero. Alternatively, when the power supply of the controller is restored, the straddled vehicle may be traveling. When the power supply of the controller is restored, the speed of the straddled vehicle may be larger than zero.

When the power supply of the controller is restored, the controller may immediately change the shift position. When the power supply of the controller is restored, the controller may immediately increase the shift speed from zero. When the power supply of the controller is restored, the controller may immediately increase the shift speed from zero to a relatively large value.

As a result, when the power supply of the controller is restored, the behavior of the straddled vehicle may significantly change. **In** other words, when the power supply of the controller is restored, the state of the straddled vehicle may significantly change. For example, when the power supply of the controller is restored, the rotational speed of the engine of the straddled vehicle may increase rapidly. For example, when the power supply of the controller is restored, the straddled vehicle may rapidly decelerate.

The present invention has been made in view of such circumstances, and an object thereof is to provide a straddled vehicle that can easily reduce a change in the behavior of the straddled vehicle when a power supply of a controller is restored.

### Description of the invention

**In** order to achieve such an object, the present invention has the following configuration.

That is, the present invention is a straddled vehicle including:
an engine generating power;
a continuously variable transmission transmitting the power of the engine to a rear wheel;
an electric motor changing a shift position of the continuously variable transmission; and
a controller controlling the electric motor, in which
when the controller changes from a non-power-supply state in which power is not supplied to the controller to a power-supply state in which power is supplied to the controller, the controller controls the electric motor to make a shift speed of the shift position equal to or less than a first speed, and
the first speed is smaller than a maximum value of the shift speed.

The straddled vehicle includes an engine, a continuously variable transmission, an electric motor, and a controller. The engine generates power. The continuously variable transmission transmits power of the engine to a rear wheel. The electric motor changes a shift position of the continuously variable transmission. The controller controls the electric motor. The controller controls the electric motor to control a shift speed of the shift position. The shift speed is a speed at which the shift position changes. The shift speed is a shift amount of the shift position per unit time. When the power supply of the controller is restored, the controller changes from the non-power-supply state to the power-supply state. The non-power-supply state is a state of the controller to which power is not supplied. The power-supply state is a state of the controller to which power is supplied. When the controller changes from the non-power-supply state to the power-supply state, the controller controls the electric motor to make a shift speed equal to or less than a first speed. The first speed is smaller than a maximum value of the shift speed. Therefore, when the controller changes from the non-power-supply state to the power-supply state, the shift speed is smaller than the maximum value. Thus, it is easy to reduce a change in the behavior of the straddled vehicle when the power supply of the controller is restored. **In** other words, it is easy to reduce a change in the state of the straddled vehicle when the power supply of the controller is restored.

In the straddled vehicle,
it is preferable that the first speed is a preset value.

Therefore, it is easy for the controller to control the shift speed to be equal to or less than the first speed.

In the straddled vehicle,
it is preferable that the first speed is a constant.

Therefore, it is easy to set the first speed in advance.

In the straddled vehicle,
it is preferable that the first speed is 50% or less of the maximum value of the shift speed.

The first speed is sufficiently small. Therefore, it is easy to sufficiently reduce a change in the behavior of the straddled vehicle when the power supply of the controller is restored.

In the straddled vehicle,
it is preferable that the controller calculates a second speed on the basis of a state of the straddled vehicle, in a case where the second speed is larger than the first speed when the controller changes from the non-power-supply state to the power-supply state, the controller controls the electric motor in a restricted mode, and in the restricted mode, the shift speed is equal to the first speed.

In a case where the second speed is larger than the first speed when the power supply of the controller is restored, the controller starts to control the electric motor in the restricted mode when the power supply of the controller is restored. In the restricted mode, the shift speed is equal to the first speed. Specifically, in the restricted mode, the controller controls the shift speed to be equal to the first speed. Therefore, in the restricted mode, the shift speed is smaller than the maximum value. Thus, in a case where the second speed is larger than the first speed when the power supply of the controller is restored, the shift speed is smaller than the maximum value when the power supply of the controller is restored. Therefore, even in a case where the second speed is larger than the first speed when the power supply of the controller is restored, it is easy to reduce a change in the behavior of the straddled vehicle.

In the straddled vehicle,
it is preferable that the second speed is a variable.

Therefore, it is easy for the second speed to take an appropriate value.

In the straddled vehicle,
it is preferable that the second speed changes according to the state of the straddled vehicle.

Therefore, it is easy for the second speed to take an appropriate value according to the state of the straddled vehicle.

In the straddled vehicle,
it is preferable that the controller repeatedly calculates the second speed.

Therefore, even when the state of the straddled vehicle changes over time, it is easy for the second speed to continue to take an appropriate value. Furthermore, it is easy for the controller to monitor a temporal change in the second speed.

In the straddled vehicle,
it is preferable that the controller continues the restricted mode until the second speed becomes equal to or less than the first speed.

**In** other words, when the second speed is larger than the first speed, the controller continues the restricted mode. Therefore, it is easy to execute the restricted mode until an appropriate timing.

**In** the straddled vehicle,
it is preferable that when the second speed becomes equal to or less than the first speed, the controller stops the control of the electric motor in the restricted mode and starts to control the electric motor in a normal mode, and in the normal mode, the shift speed is equal to the second speed.

In other words, when the second speed initially becomes equal to or less than the first speed after the start of the restricted mode, the controller switches from the restricted mode to the normal mode. Therefore, it is easy to terminate the restricted mode at an appropriate timing. It is easy to start the normal mode at an appropriate timing. It is easy to switch the mode from the restricted mode to the normal mode at an appropriate timing. In the normal mode, the shift speed is equal to the second speed. Specifically, in the normal mode, the controller controls the shift speed to be equal to the second speed. At the start of the normal mode, the second speed is equal to or less than the first speed. Therefore, at the start of the normal mode, the shift speed is smaller than the maximum value. Thus, it is easy to reduce a change in the behavior of the straddled vehicle at the start of the normal mode. In other words, it is easy to reduce a change in the behavior of the straddled vehicle when the restricted mode is switched to the normal mode. The second speed is calculated on the basis of the state of the straddled vehicle. Therefore, in the normal mode, it is easy to improve the ride comfort of the straddled vehicle.

In the straddled vehicle,
it is preferable that in a case where the second speed is equal to or less than the first speed when the controller changes from the non-power-supply state to the power-supply state, the controller controls the electric motor in a normal mode, and in the normal mode, the shift speed is equal to the second speed.

In a case where the second speed is equal to or less than the first speed when the power supply of the controller is restored, the controller starts to control the electric motor in the normal mode when the power supply of the controller is restored. In the normal mode, the shift speed is equal to the second speed. Specifically, in the normal mode, the controller controls the shift speed to be equal to the second speed. Therefore, at the start of the normal mode, the shift speed is smaller than the maximum value. Thus, in a case where the second speed is equal to or less than the first speed when the power supply of the controller is restored, the shift speed is smaller than the maximum value when the power supply of the controller is restored. Therefore, even in a case where the second speed is equal to or less than the first speed when the power supply of the controller is restored, it easy to reduce a change in the behavior of the straddled vehicle when the power supply of the controller is restored. The second speed is calculated on the basis of the state of the straddled vehicle. Therefore, in the normal mode, it is easy to improve the ride comfort of the straddled vehicle. Thus, it is easy to immediately improve the ride comfort of the straddled vehicle when the power supply of the controller is restored.

In the straddled vehicle,
it is preferable that the straddled vehicle includes a sensor detecting a state of the straddled vehicle, and the controller calculates the second speed on the basis of a detection result of the sensor.

Therefore, it is easy for the controller to acquire the state of the straddled vehicle. Thus, it is easy for the controller to calculate the second speed on the basis of the state of the straddled vehicle.

In the straddled vehicle,
it is preferable that the sensor includes a first sensor detecting a speed of the straddled vehicle, a second sensor detecting a throttle opening degree, and a third sensor detecting the shift position of the continuously variable transmission, and the controller calculates the second speed on the basis of a detection result of the first sensor, a detection result of the second sensor, and a detection result of the third sensor.

The sensor includes the first sensor, the second sensor, and the third sensor. The speed of the straddled vehicle detected by the first sensor is one of the states of the straddled vehicle. The throttle opening degree detected by the second sensor is also another one of the states of the straddled vehicle. The shift position detected by the third sensor is also another one of the states of the straddled vehicle. Therefore, it is easy for the sensor to detect the state of the straddled vehicle. The controller calculates the second speed on the basis of the detection result of the first sensor, the detection result of the second sensor, and the detection result of the third sensor. Therefore, it is easy for the controller to calculate the second speed on the basis of the detection result of the sensor.

In the straddled vehicle,
it is preferable that the controller sets a target shift position on the basis of the detection result of the first sensor and the detection result of the second sensor, the controller acquires an actual shift position on the basis of the detection result of the third sensor, and the controller calculates the second speed on the basis of a difference between the target shift position and the actual shift position.

Therefore, it is easy for the second speed to take an appropriate value according to the state of the straddled vehicle.

Here, the target shift position is a target position of the shift position. The actual shift position is an actual position of the shift position. For example, the actual shift position is measurement data of the shift position.

In the straddled vehicle,
it is preferable that when the controller changes from the non-power-supply state to the power-supply state, the controller executes a start-up process, and in the start-up process, the controller makes the shift speed equal to or less than the first speed.

Therefore, it is easy for the controller to make the shift speed equal to or less than the first speed when the controller changes from the non-power-supply state to the power-supply state.

In the straddled vehicle,
it is preferable that when the controller changes from the non-power-supply state to the power-supply state while the straddled vehicle is traveling, the controller makes the shift speed equal to or less than the first speed.

Therefore, even when the power supply of the controller is restored while the straddled vehicle is traveling, it is easy to reduce a change in the behavior of the straddled vehicle when the power supply of the controller is restored.

In the straddled vehicle,
it is preferable that when the controller changes from the power-supply state to the non-power-supply state and further changes from the non-power-supply state to the power-supply state while the straddled vehicle is traveling, the controller makes the shift speed equal to or less than the first speed.

When the power supply of the controller is cut off, the controller changes from the power-supply state to the non-power-supply state. Therefore, even when the power supply of the controller is cut off while the straddled vehicle is traveling, and then the power supply of the controller is restored, it is easy to reduce a change in the behavior of the straddled vehicle when the power supply of the controller is restored.

### Brief description of the drawings

For the purpose of illustrating the invention, there are shown in the drawings several forms which are presently preferred, it being understood, however, that the invention is not limited to the precise arrangement and instrumentalities shown.
Fig. 1 is a left side view of a straddled vehicle according to an embodiment.
Fig. 2 is a schematic diagram illustrating a configuration of a continuously variable transmission.
Fig. 3 is a schematic diagram illustrating the configuration of the continuously variable transmission.
Fig. 4 is a block diagram of a control system of the straddled vehicle.
Fig. 5 is a flowchart illustrating an operation example of the straddled vehicle.
Fig. 6 is a flowchart illustrating a procedure of a start-up process.

### Embodiments of the invention

Hereinafter, a straddled vehicle according to the present invention will be described with reference to the drawings.

### 1. Schematic configuration of straddled vehicle 1

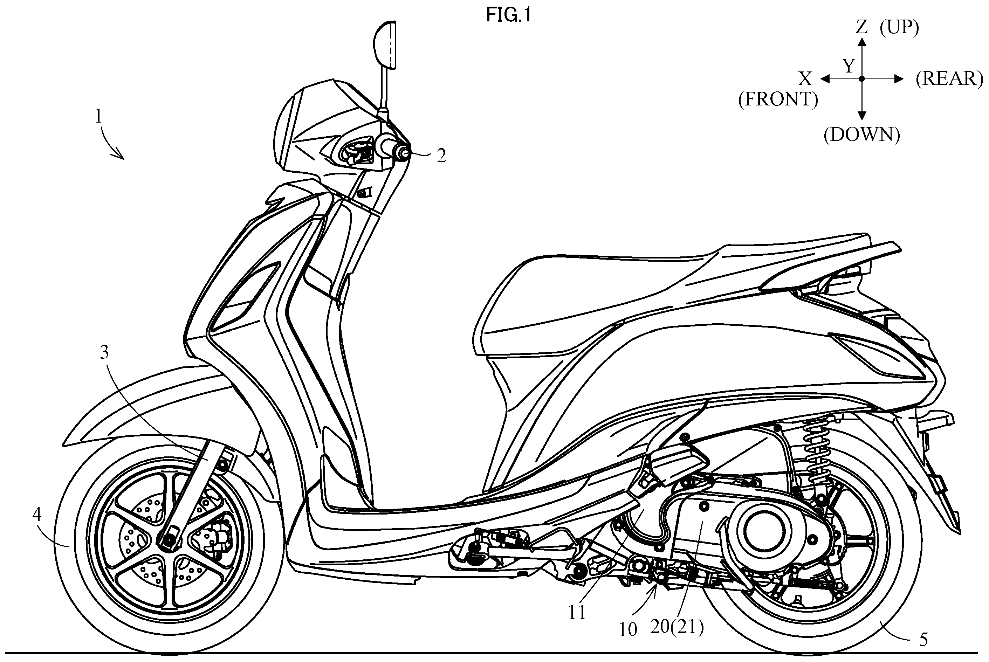

Fig. 1 is a left side view of a straddled vehicle 1 according to an embodiment. A schematic configuration of the straddled vehicle 1 will be described.

Fig. 1 illustrates a front-rear direction X, a transverse direction Y, and an up-down direction Z of the straddled vehicle 1. The front-rear direction X, the transverse direction Y, and the up-down direction Z are defined with reference to a driver (also referred to as a rider) mounted on the straddled vehicle 1. The front-rear direction X, the transverse direction Y, and the up-down direction Z are orthogonal to each other. The front-rear direction X and the transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver mounted on the straddled vehicle 1. Unless otherwise stated in this specification, "forward" and "rearward" include not only directions parallel to the front-rear direction X but also directions close to the front-rear direction X. The directions close to the front-rear direction X are, for example, directions at angles of 45 degrees or less to the front-rear direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. For reference, the drawings show the terms FRONT, REAR, UP, DOWN, RIGHT, and LEFT, as appropriate.

The straddled vehicle 1 includes a handlebar 2, a front fork 3, and a front wheel 4. The front fork 3 is connected to the handlebar 2. The front fork 3 extends downward and forward from the handlebar 2. The front wheel 4 is supported by a lower portion of the front fork 3. The front wheel 4 is rotatable with respect to the front fork 3.

The straddled vehicle 1 includes a power unit 10 and a rear wheel 5. The power unit 10 is supported by a vehicle body frame (not illustrated). The power unit 10 swings with respect to the vehicle body frame. The power unit 10 extends rearward from the vehicle body frame. The rear wheel 5 is supported by the power unit 10. The rear wheel 5 is supported by the rear portion of the power unit 10. The power unit 10 rotationally drives the rear wheel 5.

The power unit 10 includes an engine 11. The engine 11 generates power. The power of the engine 11 is, for example, rotational power.

The power unit 10 includes a continuously variable transmission 21. The continuously variable transmission 21 transmits the power of the engine 11 to the rear wheel 5.

The power unit 10 includes a transmission case 20. The transmission case 20 houses the continuously variable transmission 21. The continuously variable transmission 21 is installed inside the transmission case 20.

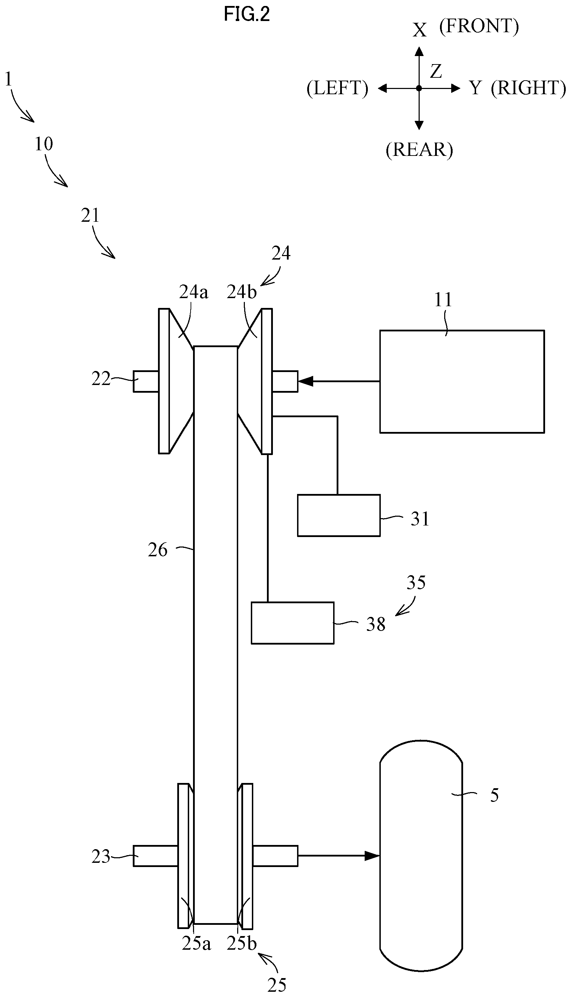

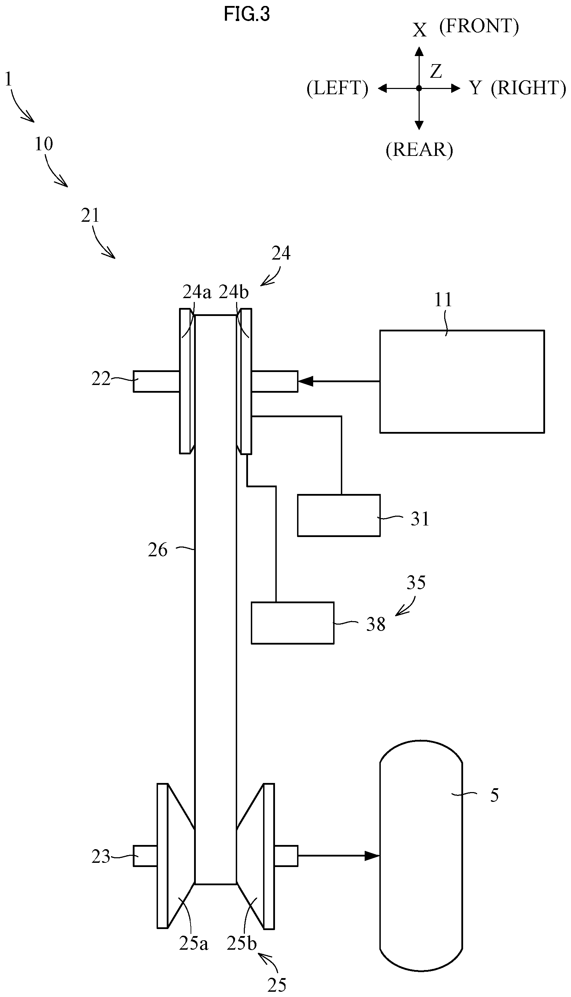

Figs. 2 and 3 are schematic diagrams illustrating the configuration of the continuously variable transmission 21.

The continuously variable transmission 21 includes a primary shaft 22. The primary shaft 22 is directly or indirectly connected to the engine 11. For example, the engine 11 includes a crankshaft (not illustrated). The primary shaft 22 is connected to the crankshaft. The primary shaft 22 is located coaxially with the crankshaft. The primary shaft 22 is rotated by the power of the engine 11. The primary shaft 22 rotates about an axis of the primary shaft 22.

The continuously variable transmission 21 includes a secondary shaft 23. The rotational power of the primary shaft 22 is transmitted to the secondary shaft 23. The secondary shaft 23 is rotated by the rotational power of the primary shaft 22. The secondary shaft 23 rotates about an axis of the secondary shaft 23. The secondary shaft 23 is directly or indirectly connected to the rear wheel 5. The rotational power of the secondary shaft 23 is transmitted to the rear wheel 5. The rear wheel 5 is rotated by the rotational power of the secondary shaft 23.

When the continuously variable transmission 21 transmits the rotational power from the primary shaft 22 to the secondary shaft 23, the continuously variable transmission 21 changes the speed change ratio. The speed change ratio is, for example, a ratio of the rotational speed of the primary shaft 22 and the rotational speed of the secondary shaft 23. When the rotational speed of the primary shaft 22 is constant, the rotational speed of the secondary shaft 23 decreases as the speed change ratio increases. When the rotational speed of the primary shaft 22 is constant, the rotational speed of the secondary shaft 23 increases as the speed change ratio decreases.

The continuously variable transmission 21 includes a primary pulley 24, a secondary pulley 25, and a belt 26. The primary pulley 24 is attached to the primary shaft 22. The primary pulley 24 rotates integrally with the primary shaft 22. The primary pulley 24 rotates about an axis of the primary shaft 22. The primary pulley 24 has a variable effective diameter. The secondary pulley 25 is attached to the secondary shaft 23. The secondary pulley 25 rotates integrally with the secondary shaft 23. The secondary pulley 25 rotates about an axis of the secondary shaft 23. The secondary pulley 25 has a variable effective diameter. The belt 26 is hung on the primary pulley 24 and the secondary pulley 25. The belt 26 travels between the primary pulley 24 and the secondary pulley 25. When the effective diameter of the primary pulley 24 increases, the effective diameter of the secondary pulley 25 decreases. When the effective diameter of the primary pulley 24 decreases, the effective diameter of the secondary pulley 25 increases.

The primary pulley 24 includes, for example, a first sheave 24a and a second sheave 24b. The first sheave 24a has, for example, a conical shape. The second sheave 24b has, for example, a conical shape. Each of the first sheave 24a and the second sheave 24b is attached to the primary shaft 22. The first sheave 24a rotates integrally with the primary shaft 22. The first sheave 24a rotates about an axis of the primary shaft 22. The second sheave 24b rotates integrally with the primary shaft 22. The second sheave 24b rotates about an axis of the primary shaft 22. The belt 26 is located between the first sheave 24a and the second sheave 24b. The belt 26 has a V-shaped cross section. The effective diameter of the primary pulley 24 depends on a separation distance between the first sheave 24a and the second sheave 24b on the axis of the primary shaft 22. The separation distance between the first sheave 24a and the second sheave 24b is variable. When the separation distance between the first sheave 24a and the second sheave 24b changes, the effective diameter of the primary pulley 24 changes.

At least one of the first sheave 24a and the second sheave 24b is movable along the axis of the primary shaft 22 with respect to the primary shaft 22. For example, the first sheave 24a is not movable along the axis of the primary shaft 22 with respect to the primary shaft 22. The first sheave 24a is fixed to the primary shaft 22. The second sheave 24b is movable along the axis of the primary shaft 22 with respect to the primary shaft 22.

The secondary pulley 25 has a structure similar to the structure of the primary pulley 24. For example, the secondary pulley 25 includes a first sheave 25a and a second sheave 25b. The first sheave 25a corresponds to the first sheave 24a. The second sheave 25b corresponds to the second sheave 24b. A relationship among the secondary shaft 23, the first sheave 25a, and the second sheave 25b is similar to a relationship among the primary shaft 22, the first sheave 24a, and the second sheave 24b.

For convenience, the speed change ratio illustrated in Fig. 2 is referred to as a "high speed change ratio". The speed change ratio illustrated in Fig. 3 is referred to as a "low speed change ratio". The low speed change ratio is lower than the high speed change ratio.

The speed change ratio of the continuously variable transmission 21 depends on the shift position of the continuously variable transmission 21.

For convenience, the shift position illustrated in Fig. 2 is referred to as a "low position". When the speed change ratio is the high speed change ratio, the shift position is at the low position.

For convenience, the shift position illustrated in Fig. 3 is referred to as a "high position". When the speed change ratio is the low speed change ratio, the shift position is at the high position.

The shift position is, for example, the position of the primary pulley 24. The shift position is, for example, the effective diameter of the primary pulley 24. The effective diameter of the primary pulley 24 when the shift position is at the low position is smaller than the effective diameter of the primary pulley 24 when the shift position is at the high position.

The shift position is, for example, the position of the first sheave 24a and the second sheave 24b. The shift position is, for example, the separation distance between the first sheave 24a and the second sheave 24b in the axis of the primary shaft 22. The separation distance between the first sheave 24a and the second sheave 24b when the shift position is at the low position is larger than the separation distance between the first sheave 24a and the second sheave 24b when the shift position is at the high position.

The shift position is, for example, the position of the second sheave 24b. The shift position is, for example, the position of the second sheave 24b in the axial direction of the primary shaft 22.

The shift position is, for example, the position of the secondary pulley 25. The shift position is, for example, the effective diameter of the secondary pulley 25. The effective diameter of the secondary pulley 25 when the shift position is at the low position is larger than the effective diameter of the secondary pulley 25 when the shift position is at the high position.

The shift position is, for example, the position of the first sheave 25a and the second sheave 25b. The shift position is, for example, the separation distance between the first sheave 25a and the second sheave 25b in the axis of the secondary shaft 23. The separation distance between the first sheave 25a and the second sheave 25b when the shift position is at the low position is smaller than the separation distance between the first sheave 25a and the second sheave 25b when the shift position is at the high position.

The shift position is, for example, the position of the second sheave 25b. The shift position is, for example, the position of the second sheave 25b in the axial direction of the secondary shaft 23.

The power unit 10 includes an electric motor 31. The electric motor 31 changes the shift position of the continuously variable transmission 21. The electric motor 31 is directly or indirectly connected to the continuously variable transmission 21.

For example, the electric motor 31 changes the effective diameter of the primary pulley 24. The electric motor 31 changes the separation distance between the first sheave 24a and the second sheave 24b. The electric motor 31 moves the second sheave 24b in the axial direction of the primary shaft 22. The electric motor 31 changes the effective diameter of the secondary pulley 25. The electric motor 31 changes the separation distance between the first sheave 25a and the second sheave 25b. The electric motor 31 moves the second sheave 25b in the axial direction of the secondary shaft 23.

For example, the electric motor 31 is directly or indirectly connected to the primary pulley 24. The electric motor 31 is directly or indirectly connected to the second sheave 24b. Alternatively, the electric motor 31 may be directly or indirectly connected to the secondary pulley 25. The electric motor 31 may be directly or indirectly connected to the second sheave 25b.

The electric motor 31 changes the shift speed of the shift position. The shift speed is a speed at which the shift position changes. The shift speed is a shift amount of the shift position per unit time.

For example, the shift speed is a change amount of the effective diameter of the primary pulley 24 per unit time. For example, the shift speed is a change amount of the separation distance between the first sheave 24a and the second sheave 24b per unit time. For example, the shift speed is a shift amount of the second sheave 24b in the axial direction of the primary shaft 22 per unit time. For example, the shift speed is a change amount of the effective diameter of the secondary pulley 25 per unit time. For example, the shift speed is a change amount of the separation distance between the first sheave 25a and the second sheave 25b per unit time. For example, the shift speed is a shift amount of the second sheave 25b in the axial direction of the secondary shaft 23 per unit time.

The maximum value of the shift speed is appropriately referred to as a "maximum value M". The maximum value M is larger than zero. The shift speed is limited to the maximum value M or less. The electric motor 31 changes the shift speed in a range from zero to the maximum value M.

The straddled vehicle 1 includes a sensor 35. The sensor 35 detects the state of the straddled vehicle 1.

The sensor 35 includes a shift position sensor 38. The shift position sensor 38 detects the shift position of the continuously variable transmission 21. For example, the shift position sensor 38 is directly or indirectly connected to the continuously variable transmission 21.

For example, the shift position sensor 38 detects the position of the primary pulley 24. The shift position sensor 38 detects the position of the second sheave 24b. The shift position sensor 38 detects the position of the second sheave 24b in the axial direction of the primary shaft 22. For example, the shift position sensor 38 is directly or indirectly connected to the primary pulley 24. For example, the shift position sensor 38 is directly or indirectly connected to the second sheave 24b.

Alternatively, the shift position sensor 38 may detect the position of the secondary pulley 25. The shift position sensor 38 may detect the position of the second sheave 25b. The shift position sensor 38 may detect the position of the second sheave 25b in the axial direction of the secondary shaft 23. The shift position sensor 38 may be directly or indirectly connected to the secondary pulley 25. The shift position sensor 38 may be directly or indirectly connected to the second sheave 25b.

The shift position sensor 38 corresponds to the third sensor of the present invention.

### 2. Control system of straddled vehicle 1

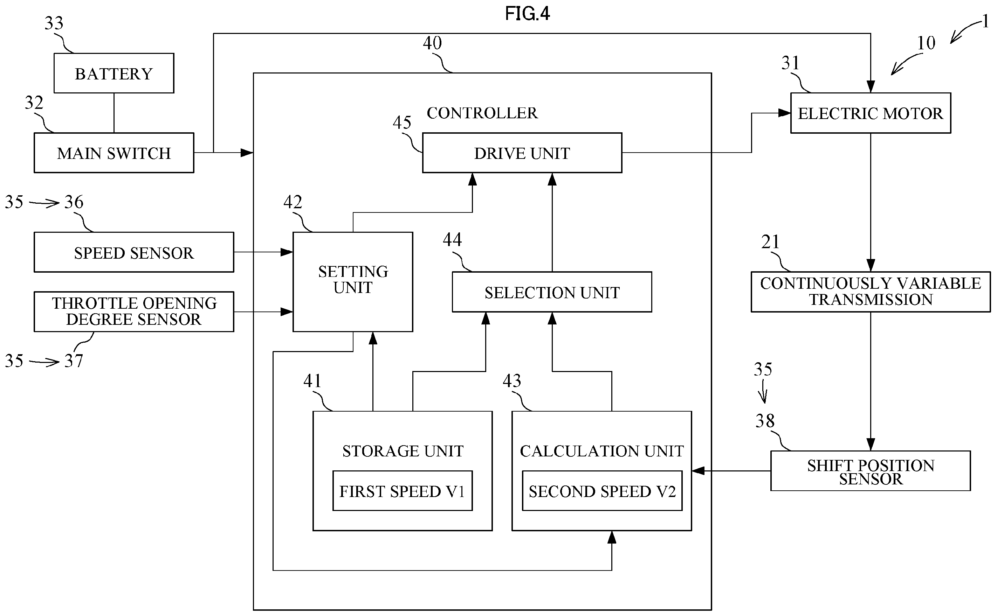

Fig. 4 is a block diagram of a control system of the straddled vehicle 1. A control system of the straddled vehicle 1 will be described.

The sensor 35 includes a speed sensor 36. The speed sensor 36 detects the speed of the straddled vehicle 1.

The speed sensor 36 corresponds to the first sensor of the present invention.

The sensor 35 includes a throttle opening degree sensor 37. The throttle opening degree sensor 37 detects a throttle opening degree. The throttle opening degree is, for example, a position of a throttle valve (not illustrated). The throttle opening degree is, for example, an operation amount of an accelerator grip (not illustrated).

The throttle opening degree sensor 37 corresponds to the second sensor of the present invention.

The straddled vehicle 1 includes a controller 40. The controller 40 acquires a detection result of the sensor 35. The detection result of the sensor 35 relates to the state of the straddled vehicle 1. The detection result of the sensor 35 relates to an actual state of the straddled vehicle 1. The detection result of the sensor 35 is measurement data of the state of the straddled vehicle 1.

The controller 40 is electrically connected to the sensor 35.

For example, the controller 40 acquires a detection result of the speed sensor 36. The detection result of the speed sensor 36 relates to a speed of the straddled vehicle 1. The detection result of the speed sensor 36 relates to an actual speed of the straddled vehicle 1. The detection result of the speed sensor 36 is measurement data of the speed of the straddled vehicle 1. The controller 40 acquires a detection result of the throttle opening degree sensor 37. The detection result of the throttle opening degree sensor 37 relates to a throttle opening degree. The detection result of the throttle opening degree sensor 37 relates to an actual throttle opening degree. The detection result of the throttle opening degree sensor 37 is measurement data of the throttle opening degree. The controller 40 acquires a detection result of the shift position sensor 38. The detection result of the shift position sensor 38 relates to a shift position of the continuously variable transmission 21. The detection result of the shift position sensor 38 relates to an actual shift position. The detection result of the shift position sensor 38 is measurement data of the shift position.

The controller 40 is electrically connected to the speed sensor 36. The controller 40 is electrically connected to the throttle opening degree sensor 37. The controller 40 is electrically connected to the shift position sensor 38.

The controller 40 controls the electric motor 31. The controller 40 controls the shift position by controlling the electric motor 31. The controller 40 controls the shift speed by controlling the electric motor 31.

The controller 40 is electrically connected to the electric motor 31.

The controller 40 controls the electric motor 31 on the basis of the detection result of the sensor 35. Thereby, the controller 40 controls the electric motor 31 on the basis of the state of the straddled vehicle 1. The controller 40 controls the electric motor 31 on the basis of the actual state of the straddled vehicle 1. The controller 40 controls the electric motor 31 on the basis of the measurement data of the state of the straddled vehicle 1.

For example, the controller 40 controls the electric motor 31 on the basis of the detection results of the speed sensor 36, the throttle opening degree sensor 37, and the shift position sensor 38.

A configuration of the controller 40 will be exemplified.

The controller 40 includes a storage unit 41, a setting unit 42, a calculation unit 43, a selection unit 44, and a drive unit 45.

The storage unit 41 stores a first speed V1. The first speed V1 is a target speed of the shift speed. The first speed V1 is smaller than the maximum value M. For example, the first speed V1 is 50% or less of the maximum value M. For example, the first speed V1 is equal to 50% of the maximum value M of the shift speed. For example, the first speed V1 is equal to 30% of the maximum value M of the shift speed.

The first speed V1 is larger than zero.

For example, the first speed V1 is a preset value. For example, the first speed V1 is a constant. For example, the first speed V1 does not depend on the state of the straddled vehicle 1.

The setting unit 42 sets a target shift position. The target shift position is a target position of the shift position. The setting unit 42 sets the target shift position on the basis of the state of the straddled vehicle 1.

For example, the target shift position is based on the detection result of the speed sensor 36 and the detection result of the throttle opening degree sensor 37. The target shift position is not based on the detection result of the shift position sensor 38.

A first example of a procedure for setting the target shift position will be described. In the first example, the setting unit 42 sets a target speed change ratio.

First, the setting unit 42 sets a target speed change ratio on the basis of the detection result of the speed sensor 36 and the detection result of the throttle opening degree sensor 37. When the setting unit 42 sets the target speed change ratio, the setting unit 42 may use at least one of a first map and a first function. The first map is expressed by a table that defines a relationship among the speed of the straddled vehicle 1, the throttle opening degree, and the target speed change ratio. The first function is expressed by a mathematical expression that defines a relationship among the speed of the straddled vehicle 1, the throttle opening degree, and the target speed change ratio.

Next, the setting unit 42 sets a target shift position on the basis of the target speed change ratio. When the setting unit 42 sets the target shift position, the setting unit 42 may use at least one of a second map and a second function. The second map is expressed by a table that defines a relationship between the target speed change ratio and the target shift position. The second function is expressed by a mathematical expression that defines a relationship between the target speed change ratio and the target shift position.

A second example of a procedure for setting the target shift position will be described. In the second example, the setting unit 42 does not set a target speed change ratio.

The setting unit 42 sets a target shift position on the basis of the detection result of the speed sensor 36 and the detection result of the throttle opening degree sensor 37. When the setting unit 42 sets the target shift position, the setting unit 42 may use at least one of a third map and a third function. The third map is expressed by a table that defines a relationship among the speed of the straddled vehicle 1, the throttle opening degree, and the target shift position. The third function is expressed by a mathematical expression that defines a relationship among the speed of the straddled vehicle 1, the throttle opening degree, and the target shift position.

For example, the first to third maps and the first to third functions are set in advance. The first to third maps and the first to third functions are stored in the storage unit 41.

The calculation unit 43 calculates a second speed V2 on the basis of the state of the straddled vehicle 1. The second speed V2 is a target speed of the shift speed.

The second speed V2 is a variable. The second speed V2 depends on the state of the straddled vehicle 1. The second speed V2 changes according to the state of the straddled vehicle 1.

The second speed V2 is limited to the maximum value M or less. The second speed V2 takes a value within a range from zero to the maximum value M.

For example, the second speed V2 depends on the target shift position and the actual shift position. For example, the second speed V2 depends on a difference between the target shift position and the actual shift position. The difference between the target shift position and the actual shift position is appropriately referred to as a "difference D". As the difference D increases, the second speed V2 increases. As the difference D decreases, the second speed V2 decreases. When the difference D is zero, the second speed V2 is zero.

The calculation unit 43 calculates the second speed V2 on the basis of the detection result of the sensor 35. For example, the calculation unit 43 sets the second speed V2 on the basis of the detection result of the speed sensor 36, the detection result of the throttle opening degree sensor 37, and the detection result of the shift position sensor 38.

Specifically, the calculation unit 43 acquires a target shift position on the basis of the detection result of the speed sensor 36 and the detection result of the throttle opening degree sensor 37. For example, the calculation unit 43 may acquire the target shift position from the setting unit 42. The calculation unit 43 acquires an actual shift position on the basis of the detection result of the shift position sensor 38. The calculation unit 43 calculates the difference D on the basis of the target shift position and the actual shift position. The calculation unit 43 calculates the second speed V2 on the basis of the difference D.

The selection unit 44 selects any one of the first speed V1 and the second speed V2. The selection unit 44 selects any one of the first speed V1 and the second speed V2 as the shift speed. More specifically, the selection unit 44 selects any one of the first speed V1 and the second speed V2 as the target speed of the shift speed.

The drive unit 45 acquires a target shift position from the setting unit 42. The drive unit 45 acquires any one of the first speed V1 and the second speed V2 from the selection unit 44. The drive unit 45 controls the electric motor 31 on the basis of the target shift position and any one of the first speed V1 and the second speed V2. When the selection unit 44 selects the first speed V1, the drive unit 45 changes the actual shift position to the target shift position at the first speed V1. When the selection unit 44 selects the second speed V2, the drive unit 45 changes the actual shift position to the target shift position at the second speed V2.

Controlling the shift speed to the first speed V1 is referred to as a "restricted mode". Controlling the shift speed to the second speed V2 is referred to as a "normal mode". When the selection unit 44 selects the first speed V1, the drive unit 45 controls the shift speed in the restricted mode. When the selection unit 44 selects the second speed V2, the drive unit 45 controls the shift speed in the normal mode.

The straddled vehicle 1 includes a main switch 32. The main switch 32 is switched between on and off.

The main switch 32 is electrically connected to the controller 40. When the main switch 32 is on, power is supplied to the controller 40. When the main switch 32 is off, power is not supplied to the controller 40.

The main switch 32 is switched between on and off, for example, by an operation of a driver. Although the main switch 32 is not illustrated in Fig. 1, the main switch 32 is provided below the handlebar 2, for example.

The straddled vehicle 1 includes a battery 33. The battery 33 is electrically connected to the main switch 32.

The battery 33 is electrically connected to the controller 40 via the main switch 32. When the main switch 32 is on, the battery 33 supplies power to the controller 40. When the main switch 32 is off, the battery 33 does not supply power to the controller 40.

The main switch 32 is electrically connected to the electric motor 31. When the main switch 32 is on, power is supplied to the electric motor 31. When the main switch 32 is off, power is not supplied to the electric motor 31.

The battery 33 is electrically connected to the electric motor 31 via the main switch 32. When the main switch 32 is on, the battery 33 supplies power to the electric motor 31. When the main switch 32 is off, the battery 33 does not supply power to the electric motor 31.

### 3. Operation example of straddled vehicle 1

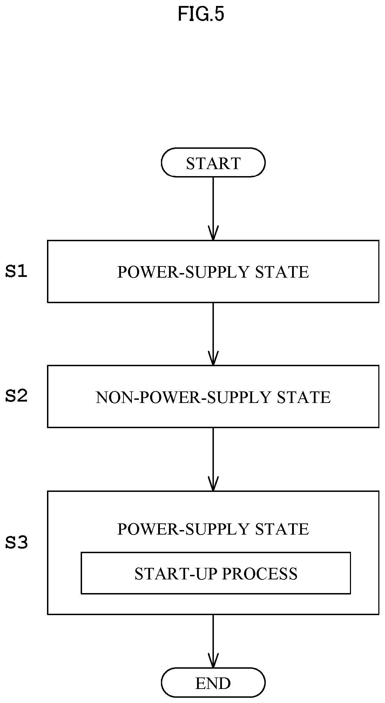

Fig. 5 is a flowchart illustrating an operation example of the straddled vehicle 1. An example of the operation of the straddled vehicle 1 will be described.

### Step S1

The controller 40 is in the power-supply state. When the controller 40 is in the power-supply state, power is supplied to the controller 40.

When the controller 40 is in the power-supply state, the controller 40 controls the electric motor 31. When the controller 40 is in the power-supply state, the controller 40 controls the shift position. When the controller 40 is in the power-supply state, the controller 40 controls the shift speed.

### Step S2

When the controller 40 changes from the power-supply state to the non-power-supply state, the power supply of the controller 40 is cut off. When the power supply of the controller 40 is cut off, the controller 40 stops the control of the electric motor 31. When the power supply of the controller 40 is cut off, the controller 40 stops the control of the shift position. When the power supply of the controller 40 is cut off, the controller 40 stops the control of the shift speed.

When the controller 40 is in the non-power-supply state, power is not supplied to the controller 40.

When the controller 40 is in the non-power-supply state, the controller 40 does not control the electric motor 31. When the controller 40 is in the non-power-supply state, the controller 40 does not control the shift position. When the controller 40 is in the non-power-supply state, the controller 40 does not control the shift speed.

Therefore, when the controller 40 is in the non-power-supply state, the shift position is stationary. When the controller 40 is in the non-power-supply state, the shift position is fixed. When the controller 40 is in the non-power-supply state, the shift position is held. When the controller 40 is in the non-power-supply state, the shift speed is zero.

### Step S3

The controller 40 changes from the non-power-supply state to the power-supply state. The power supply of the controller 40 is restored. When the power supply of the controller 40 is restored, the controller 40 resumes the control of the electric motor 31. When the power supply of the controller 40 is restored, the controller 40 resumes the control of the shift position. When the power supply of the controller 40 is restored, the controller 40 resumes the control of the shift speed.

As described above, the controller 40 changes between the power-supply state and the non-power-supply state. The transition between the power-supply state and the non-power-supply state is caused by an electrical connection failure between the controller 40 and the battery 33.

Even when the straddled vehicle 1 is stopped or when the straddled vehicle 1 is traveling, "an electrical connection failure between the controller 40 and the battery 33" may occur.

Here, when the straddled vehicle 1 is stopped, the speed of the straddled vehicle 1 is, for example, zero. When the straddled vehicle 1 is traveling, the speed of the straddled vehicle 1 is larger than zero.

Therefore, in steps S1 and S3, the straddled vehicle 1 may be stopped or may be traveling. Specifically, when the controller 40 is in the power-supply state, the straddled vehicle 1 may be stopped or may be traveling.

In step S2, the straddled vehicle 1 may be stopped or may be traveling. Specifically, when the controller 40 is in the non-power-supply state, the straddled vehicle 1 may be stopped or may be traveling.

In the transition from step S1 to step S2, the straddled vehicle 1 may be stopped or may be traveling. Specifically, when the power supply of the controller 40 is cut off, the straddled vehicle 1 may be stopped or may be traveling.

In the transition from step S2 to step S3, the straddled vehicle 1 may be stopped or may be traveling. Specifically, when the power supply of the controller 40 is restored, the straddled vehicle 1 may be stopped or may be traveling.

The actual shift position when the power supply of the controller 40 is restored is the same as the actual shift position when the power supply of the controller 40 is cut off.

The state of the straddled vehicle 1 when the power supply of the controller 40 is restored may be different from the state of the straddled vehicle 1 when the power supply of the controller 40 is cut off. For example, the speed of the straddled vehicle 1 when the power supply of the controller 40 is restored may be different from the speed of the straddled vehicle 1 when the power supply of the controller 40 is cut off. For example, the throttle opening degree when the power supply of the controller 40 is restored may be different from the throttle opening degree when the power supply of the controller 40 is cut off.

As a result, the target shift position when the power supply of the controller 40 is restored may be different from the target shift position when the power supply of the controller 40 is cut off. The difference D when the power supply of the controller 40 is restored may be different from the difference D when the power supply of the controller 40 is cut off.

Therefore, when the power supply of the controller 40 is restored, the controller 40 starts a start-up process. Specifically, when the controller 40 changes from the non-power-supply state to the power-supply state, the controller 40 executes the start-up process. For example, when the power supply of the controller 40 is momentarily interrupted due to an electrical connection failure between the controller 40 and the battery 33, the controller 40 executes the start-up process.

In the start-up process, the controller 40 resumes the control of the electric motor 31. In the start-up process, the controller 40 resumes the control of the shift position. In the start-up process, the controller 40 resumes the control of the shift speed.

In the start-up process, the controller 40 makes the shift speed equal to or less than the first speed V1. More specifically, in the start-up process, the controller 40 controls an actual shift speed to be equal to or less than the first speed V1.

As a result, when the controller 40 changes from the non-power-supply state to the power-supply state, the controller 40 controls the electric motor 31 to make the shift speed equal to or less than the first speed V1.

For example, when the controller 40 changes from the non-power-supply state to the power-supply state while the straddled vehicle 1 is traveling, the controller 40 makes the shift speed equal to or less than the first speed V1.

For example, when the controller 40 changes from the power-supply state to the non-power-supply state and further changes from the non-power-supply state to the power-supply state while the straddled vehicle 1 is traveling, the controller 40 makes the shift speed equal to or less than the first speed V1.

For example, when the power supply of the controller 40 is momentarily interrupted due to an electrical connection failure between the controller 40 and the battery 33, the controller 40 makes the shift speed equal to or less than the first speed V1.

Note that, although not illustrated in Fig. 5, the power-supply state in step S1 also includes a start-up process. Note that, although the power-supply state in step S1 also includes the start-up process, illustration of the start-up process in step S1 is omitted in Fig. 5 for convenience.

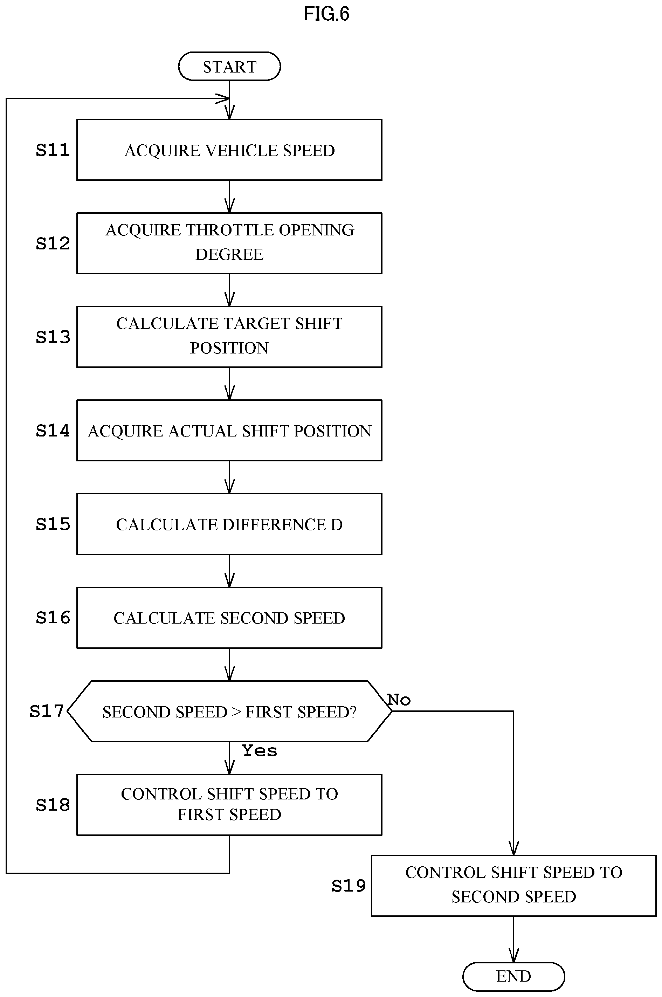

Fig. 6 is a flowchart illustrating a procedure of a start-up process. The start-up process will be described.

### Step S11

The controller 40 acquires a detection result of the speed sensor 36. Specifically, the setting unit 42 acquires an actual speed of the straddled vehicle 1.

### Step S12

The controller 40 acquires a detection result of the throttle opening degree sensor 37. Specifically, the setting unit 42 acquires an actual throttle opening degree.

### Step S13

The controller 40 calculates a target shift position on the basis of the detection result of the speed sensor 36 and the detection result of the throttle opening degree sensor 37. Specifically, the setting unit 42 sets the target shift position on the basis of the actual speed of the straddled vehicle 1 and the actual throttle opening degree.

### Step S14

The controller 40 acquires a detection result of the shift position sensor 38. The controller 40 acquires an actual shift position on the basis of the detection result of the shift position sensor 38. Specifically, the calculation unit 43 acquires an actual shift position.

### Step S15

The controller 40 calculates the difference D on the basis of the detection results of the speed sensor 36, the throttle opening degree sensor 37, and the shift position sensor 38. Specifically, the calculation unit 43 calculates the difference D on the basis of the target shift position and the actual shift position.

### Step S16

The controller 40 calculates the second speed V2 on the basis of the state of the straddled vehicle 1. The controller 40 calculates the second speed V2 on the basis of the detection result of the sensor 35. The controller 40 calculates the second speed V2 on the basis of the detection results of the speed sensor 36, the throttle opening degree sensor 37, and the shift position sensor 38. The controller 40 calculates the second speed V2 on the basis of the difference D. Specifically, the calculation unit 43 calculates the second speed V2.

### Step S17

The controller 40 compares the first speed V1 with the second speed V2. Specifically, the selection unit 44 determines whether or not the second speed V2 is larger than the first speed V1. When the second speed V2 is larger than the first speed V1, the process proceeds to step S18. When the second speed V2 is equal to or less than the first speed V1, the process proceeds to step S19.

### Step S18

The controller 40 controls the electric motor 31 in the restricted mode. In the restricted mode, the shift speed is equal to the first speed V1. Specifically, in the restricted mode, the controller 40 controls the actual shift speed to be equal to the first speed V1.

More specifically, the selection unit 44 selects the first speed V1. The drive unit 45 controls the electric motor 31 on the basis of the first speed V1 and the target shift position.

For example, in a case where the second speed V2 is larger than the first speed V1 when the power supply of the controller 40 is restored, the controller 40 starts to control the shift speed in the restricted mode. In a case where the second speed V2 is larger than the first speed V1 when the power supply of the controller 40 is restored, the controller 40 resumes the control of the shift speed in the restricted mode.

Then, the process returns from step S18 to step S11. In the restricted mode, the controller 40 repeats and executes the processing of steps S11 to S17. Thereby, the controller 40 continues the restricted mode until the second speed V2 becomes equal to or less than the first speed V1.

### Step S19

The controller 40 controls the electric motor 31 in the normal mode. In the normal mode, the shift speed is equal to the second speed V2. Specifically, in the normal mode, the controller 40 controls the actual shift speed to be equal to the second speed V2.

More specifically, the selection unit 44 selects the second speed V2. The drive unit 45 controls the electric motor 31 on the basis of the second speed V2 and the target shift position.

For example, in a case where the second speed V2 is equal to or less than the first speed V1 when the power supply of the controller 40 is restored, the controller 40 starts to control the shift speed in the normal mode. In a case where the second speed V2 is equal to or less than the first speed V1 when the power supply of the controller 40 is restored, the controller 40 resumes the control of the shift speed in the normal mode.

As described above, in a case where the second speed V2 is larger than the first speed V1 when the power supply of the controller 40 is restored, the controller 40 starts to control the shift speed in the restricted mode. In this case, when the second speed V2 becomes equal to or less than the first speed V1 in the restricted mode, the controller 40 stops the control of the electric motor 31 in the restricted mode. When the second speed V2 becomes equal to or less than the first speed V1 in the restricted mode, the controller 40 starts to control the electric motor 31 in the normal mode. That is, when the second speed V2 becomes equal to or less than the first speed V1 in the restricted mode, the controller 40 switches from the restricted mode from the normal mode. Here, "when the second speed V2 becomes equal to or less than the first speed V1 in the restricted mode" can be rephrased as "when the second speed V2 first becomes equal to or less than the first speed V1 after the start of the restricted mode".

When the normal mode starts, the start-up process ends.

After the normal mode starts, the second speed V2 may become larger than the first speed V1. When the second speed V2 becomes larger than the first speed V1 in the normal mode, the actual shift speed becomes larger than the first speed V1.

### 4. Effects of embodiment

The straddled vehicle 1 includes the engine 11, the continuously variable transmission 21, the electric motor 31, and the controller 40. The engine 11 generates power. The continuously variable transmission 21 transmits the power of the engine 11 to the rear wheel 5. The electric motor 31 changes the shift position of the continuously variable transmission 21. The controller 40 controls the electric motor 31. The controller 40 controls the electric motor 31 and controls the shift speed of the shift position. The shift speed is a speed at which the shift position changes. The shift speed is a shift amount of the shift position per unit time. When the power supply of the controller 40 is restored, the controller 40 changes from the non-power-supply state to the power-supply state. The non-power-supply state is a state of the controller 40 to which power is not supplied. The power-supply state is a state of the controller 40 to which power is supplied. When the controller 40 changes from the non-power-supply state to the power-supply state, the controller 40 controls the electric motor 31 to make the shift speed equal to or less than the first speed V1. The first speed V1 is smaller than the maximum value M of the shift speed. Therefore, when the controller 40 changes from the non-power-supply state to the power-supply state, the shift speed is smaller than the maximum value M. Thus, it is easy to reduce a change in the behavior of the straddled vehicle 1 when the power supply of the controller 40 is restored. In other words, it is easy to reduce a change in the state of the straddled vehicle 1 when the power supply of the controller 40 is restored.

The first speed V1 is a preset value. Therefore, it is easy for the controller 40 to control the shift speed to be equal to or less than the first speed V1.

The first speed V1 is a constant. Therefore, it is easy to set the first speed V1 in advance.

The first speed V1 is 50% or less of the maximum value of the shift speed. The first speed V1 is sufficiently small. Therefore, it is easy to sufficiently reduce a change in the behavior of the straddled vehicle 1 when the power supply of the controller 40 is restored.

The controller 40 calculates the second speed V2 on the basis of the state of the straddled vehicle 1. In a case where the second speed V2 is larger than the first speed V1 when the controller 40 changes from the non-power-supply state to the power-supply state, the controller 40 controls the electric motor 31 in the restricted mode. That is, in a case where the second speed V2 is larger than the first speed V1 when the power supply of the controller 40 is restored, the controller 40 starts to control the electric motor 31 in the restricted mode when the power supply of the controller 40 is restored. In the restricted mode, the shift speed is equal to the first speed V1. Specifically, in the restricted mode, the controller 40 controls the shift speed to be equal to the first speed V1. Therefore, in the restricted mode, the shift speed is smaller than the maximum value M. Thus, in a case where the second speed V2 is larger than the first speed V1 when the power supply of the controller 40 is restored, the shift speed is smaller than the maximum value M when the power supply of the controller 40 is restored. Therefore, even in a case where the second speed V2 is larger than the first speed V1 when the power supply of the controller 40 is restored, it is easy to reduce a change in the behavior of the straddled vehicle 1.

The second speed V2 is a variable. Therefore, it is easy for the second speed V2 to take an appropriate value.

The second speed V2 changes according to the state of the straddled vehicle 1. Therefore, it is easy for the second speed V2 to take an appropriate value according to the state of the straddled vehicle 1.

The controller 40 repeatedly calculates the second speed V2. Therefore, even when the state of the straddled vehicle 1 changes over time, it is easy for the second speed V2 to continue to take an appropriate value. Furthermore, it is easy for the controller 40 to monitor a temporal change in the second speed V2.

The controller 40 continues the restricted mode until the second speed V2 becomes equal to or less than the first speed V1. In other words, when the second speed V2 is larger than the first speed V1, the controller 40 continues the restricted mode. Therefore, it is easy to execute the restricted mode until an appropriate timing.

When the second speed V2 becomes equal to or less than the first speed V1, the controller 40 stops the control of the electric motor 31 in the restricted mode and starts to control the electric motor 31 in the normal mode. In other words, when the second speed V2 initially becomes equal to or less than the first speed V1 after the start of the restricted mode, the controller 40 switches from the restricted mode to the normal mode. Therefore, it is easy to terminate the restricted mode at an appropriate timing. It is easy to start the normal mode at an appropriate timing. It is easy to switch the mode from the restricted mode to the normal mode at an appropriate timing.

In the normal mode, the shift speed is equal to the second speed V2. Specifically, in the normal mode, the controller controls the shift speed to be equal to the second speed V2. At the start of the normal mode, the second speed V2 is equal to or less than the first speed V1. Therefore, at the start of the normal mode, the shift speed is smaller than the maximum value M. Thus, it is easy to reduce a change in the behavior of the straddled vehicle 1 at the start of the normal mode. In other words, it is easy to reduce a change in the behavior of the straddled vehicle 1 when the restricted mode is switched to the normal mode.

The second speed V2 is calculated on the basis of the state of the straddled vehicle 1. Therefore, in the normal mode, it is easy to improve the ride comfort of the straddled vehicle 1.

In a case where the second speed V2 is equal to or less than the first speed V1 when the controller 40 changes from the non-power-supply state to the power-supply state, the controller 40 controls the electric motor 31 in the normal mode. That is, in a case where the second speed V2 is equal to or less than the first speed V1 when the power supply of the controller 40 is restored, the controller 40 starts to control the electric motor 31 in the normal mode when the power supply of the controller 40 is restored. In the normal mode, the shift speed is equal to the second speed V2. Specifically, in the normal mode, the controller 40 controls the shift speed to be equal to the second speed V2. Therefore, at the start of the normal mode, the shift speed is smaller than the maximum value M. Thus, in a case where the second speed V2 is equal to or less than the first speed V1 when the power supply of the controller 40 is restored, the shift speed is smaller than the maximum value M when the power supply of the controller 40 is restored. Therefore, even in a case where the second speed V2 is equal to or less than the first speed V1 when the power supply of the controller 40 is restored, it easy to reduce a change in the behavior of the straddled vehicle 1 when the power supply of the controller 40 is restored.

As described above, the second speed V2 is calculated on the basis of the state of the straddled vehicle 1. Therefore, in the normal mode, it is easy to improve the ride comfort of the straddled vehicle 1. Thus, it is easy to immediately improve the ride comfort of the straddled vehicle 1 when the power supply of the controller 40 is restored.

The straddled vehicle 1 includes a sensor 35 that detects the state of the straddled vehicle 1. The controller 40 calculates the second speed V2 on the basis of the detection result of the sensor 35. Therefore, it is easy for the controller 40 to acquire the state of the straddled vehicle 1. Thus, it is easy for the controller 40 to calculate the second speed V2 on the basis of the state of the straddled vehicle 1.

The sensor 35 includes a speed sensor 36, a throttle opening degree sensor 37, and a shift position sensor 38. The speed sensor 36 detects the speed of the straddled vehicle 1. The throttle opening degree sensor 37 detects a throttle opening degree. The shift position sensor 38 detects the shift position of the continuously variable transmission 21. The speed of the straddled vehicle 1 detected by the speed sensor 36 is one of the states of the straddled vehicle 1. The throttle opening degree detected by the throttle opening degree sensor 37 is also another one of the states of the straddled vehicle 1. The shift position detected by the shift position sensor 38 is also another one of the states of the straddled vehicle 1. Therefore, it is easy for the sensor 35 to detect the state of the straddled vehicle 1.

The controller 40 calculates the second speed V2 on the basis of the detection result of the speed sensor 36, the detection result of the throttle opening degree sensor 37, and the detection result of the shift position sensor 38. Therefore, it is easy for the controller 40 to calculate the second speed V2 on the basis of the detection result of the sensor 35.

The controller 40 sets a target shift position on the basis of the detection result of the speed sensor 36 and the detection result of the throttle opening degree sensor 37. The controller 40 acquires an actual shift position on the basis of the detection result of the shift position sensor 38. The controller 40 calculates the second speed V2 on the basis of the difference D between the target shift position and the actual shift position. Therefore, it is easy for the second speed V2 to take an appropriate value according to the state of the straddled vehicle 1.

When the controller 40 changes from the non-power-supply state to the power-supply state, the controller 40 executes the start-up process. **In** the start-up process, the controller 40 makes the shift speed equal to or less than the first speed V1. Therefore, it is easy for the controller 40 to make the shift speed equal to or less than the first speed V1 when the controller 40 changes from the non-power-supply state to the power-supply state.

When the controller 40 changes from the non-power-supply state to the power-supply state while the straddled vehicle 1 is traveling, the controller 40 makes the shift speed equal to or less than the first speed V1. Therefore, even when the power supply of the controller 40 is restored while the straddled vehicle 1 is traveling, it is easy to reduce a change in the behavior of the straddled vehicle 1 when the power supply of the controller 40 is restored.

When the controller 40 changes from the power-supply state to the non-power-supply state and further changes from the non-power-supply state to the power-supply state while the straddled vehicle 1 is traveling, the controller 40 makes the shift speed equal to or less than the first speed V1. Therefore, even when the power supply of the controller 40 is cut off while the straddled vehicle 1 is traveling, and then the power supply of the controller 40 is restored, it is easy to reduce a change in the behavior of the straddled vehicle 1 when the power supply of the controller 40 is restored.

### 5. Modified embodiments

This invention is not limited to the above embodiment, and can be modified as follows.
(1) In the embodiment, the first speed V1 was a preset value. However, the first speed V1 may not be a preset value. For example, when the controller 40 changes from the non-power-supply state to the power-supply state, the controller 40 may acquire the first speed V1.

In the embodiment, the first speed V1 was a constant. However, the first speed V1 may be a variable. The first speed V1 may be a variable within a range of zero or more and smaller than the maximum value M.

First and second modified embodiments relating to the first speed V1 will be described.

### First modified embodiment

For convenience, the speed of the straddled vehicle 1 when the controller 40 changes from the non-power-supply state to the power-supply state is referred to as a "vehicle speed K". The first speed V1 depends on the vehicle speed K. For example, as the vehicle speed K decreases, the first speed V1 increases. For example, when the vehicle speed K is a low vehicle speed KL, the first speed V1 is a high first speed V1H. When the vehicle speed K is a high vehicle speed KH, the first speed V1 is a low first speed V1L. The low vehicle speed KL is lower than the high vehicle speed KH. The high first speed V1H is higher than the low first speed V1L.

When the first speed V1 is the high first speed V1H, the shift speed may be relatively high. When the vehicle speed K is the low vehicle speed KL, it is difficult to change the behavior of the straddled vehicle 1 by the shift speed. Therefore, even when the shift speed is relatively high, it is easy to reduce a change in the behavior of the straddled vehicle 1 at the low vehicle speed KL.

When the first speed V1 is the low first speed V1L, the shift speed is relatively low. When the vehicle speed K is the high vehicle speed KH, it is easy to change the behavior of the straddled vehicle 1 by the shift speed. However, since the shift speed is relatively low, it is easy to reduce a change in the behavior of the straddled vehicle 1 at the high vehicle speed KH.

### Second modified embodiment

The first speed V1 depends on the second speed V2. For example, the first speed V1 is smaller than the second speed V2. The first speed V1 is equal to 50% of the second speed V2.

In the second modified embodiment, the process in step S17 may be changed as appropriate. Specifically, the process of determining the timing of switching from the restricted mode to the normal mode may be appropriately changed.

For example, the time during which the restricted mode is executed is referred to as "execution time". When the restricted mode is started, the controller 40 starts measuring the execution time. Then, when the execution time exceeds a first time T1, the controller 40 switches from the restricted mode to the normal mode.

The first time T1 may be a preset value. The first time T1 may be a constant. Alternatively, the first time T1 may not be a preset value. When the controller 40 changes from the non-power-supply state to the power-supply state, the controller 40 may acquire the first time T1. The first time T1 may be a variable. The first time T1 may be a variable that depends on the vehicle speed K.

(2) In the embodiment, the number of front wheels 4 is one. However, the present invention is not limited thereto. The number of front wheels 4 may be two. In the embodiment, the number of rear wheels 5 is one. The present invention is not limited thereto. The number of rear wheels 5 may be two.

(3) In the embodiment, a scooter-type vehicle as the straddled vehicle 1 has been exemplified. However, the present invention is not limited thereto. For example, the straddled vehicle 1 may be changed to vehicles of other types, such as a street type, a sport type, an off-road type, or an all-terrain vehicle.

(4) In the embodiment and each modified embodiment described in the above (1) to (3), each configuration may be appropriately changed by further replacing or combining each configuration with another modified embodiment.

## Claims

1. A straddled vehicle (1) comprising:
an engine (11) generating power;
a continuously variable transmission (21) transmitting the power of the engine (11) to a rear wheel (5);
an electric motor (31) changing a shift position of the continuously variable transmission (21); and
a controller (40) controlling the electric motor (31), wherein
when the controller (40) changes from a non-power-supply state in which power is not supplied to the controller (40) to a power-supply state in which power is supplied to the controller (40), the controller (40) controls the electric motor (31) to make a shift speed of the shift position equal to or less than a first speed (V1), and
the first speed (V1) is smaller than a maximum value (M) of the shift speed.

2. The straddled vehicle (1) according to claim 1, wherein
the first speed (V1) is a preset value.

3. The straddled vehicle (1) according to claim 1 or 2, wherein
the first speed (V1) is 50% or less of the maximum value (M) of the shift speed.

4. The straddled vehicle (1) according to any one of claims 1 to 3, wherein
the controller (40) calculates a second speed (V2) on the basis of a state of the straddled vehicle (1),
in a case where the second speed (V2) is larger than the first speed (V1) when the controller (40) changes from the non-power-supply state to the power-supply state, the controller (40) controls the electric motor (31) in a restricted mode, and
in the restricted mode, the shift speed is equal to the first speed (V1).

5. The straddled vehicle (1) according to claim 4, wherein
the controller (40) continues the restricted mode until the second speed (V2) becomes equal to or less than the first speed (V1).

6. The straddled vehicle (1) according to claim 4 or 5, wherein
when the second speed (V2) becomes equal to or less than the first speed (V1), the controller (40) stops the control of the electric motor (31) in the restricted mode and starts to control the electric motor (31) in a normal mode, and
in the normal mode, the shift speed is equal to the second speed (V2).

7. The straddled vehicle (1) according to any one of claims 4 to 6, wherein
in a case where the second speed (V2) is equal to or less than the first speed (V1) when the controller (40) changes from the non-power-supply state to the power-supply state, the controller (40) controls the electric motor (31) in a normal mode, and
in the normal mode, the shift speed is equal to the second speed (V2).

8. The straddled vehicle (1) according to any one of claims 4 to 7, wherein
the straddled vehicle (1) comprises
a sensor (35) detecting a state of the straddled vehicle (1), and
the controller (40) calculates the second speed (V2) on the basis of a detection result of the sensor (35).

9. The straddled vehicle (1) according to claim 8, wherein
the sensor (35) includes:
a first sensor (36) detecting a speed of the straddled vehicle (1),
a second sensor (37) detecting a throttle opening degree, and
a third sensor (38) detecting the shift position of the continuously variable transmission (21), and
the controller (40) calculates the second speed (V2) on the basis of a detection result of the first sensor (36), a detection result of the second sensor (37), and a detection result of the third sensor (38).

10. The straddled vehicle (1) according to claim 9, wherein
the controller (40) sets a target shift position on the basis of the detection result of the first sensor (36) and the detection result of the second sensor (37),
the controller (40) acquires an actual shift position on the basis of the detection result of the third sensor (38), and
the controller (40) calculates the second speed (V2) on the basis of a difference (D) between the target shift position and the actual shift position.

11. The straddled vehicle (1) according to any one of claims 1 to 10, wherein
when the controller (40) changes from the non-power-supply state to the power-supply state, the controller (40) executes a start-up process, and
in the start-up process, the controller (40) makes the shift speed equal to or less than the first speed (V1).

12. The straddled vehicle (1) according to any one of claims 1 to 11, wherein
when the controller (40) changes from the non-power-supply state to the power-supply state while the straddled vehicle (1) is traveling, the controller (40) makes the shift speed equal to or less than the first speed (V1).

13. The straddled vehicle (1) according to any one of claims 1 to 12, wherein
when the controller (40) changes from the power-supply state to the non-power-supply state and further changes from the non-power-supply state to the power-supply state while the straddled vehicle (1) is traveling, the controller (40) makes the shift speed equal to or less than the first speed (V1).
